# EUROPÄISCHE PATENTANMELDUNG

(11) **EP 1 279 949 A2**
(43) Veröffentlichungstag der Anmeldung: **29.01.2003**
(21) Anmeldenummer: 02013755.0
(22) Anmeldetag: 21.06.2002
(51) Int. Cl.: G01N 21/76

(54) **Vorrichtung zur Messung der Chemilumineszenz**

(30) Priorität: 28.07.2001 DE 10136865
(71) Anmelder: Berthold Technologies GmbH & Co. KG, 75323 Bad Wildbad (DE)
(72) Erfinder: Berthold, Fritz, 75173 Pforzheim (DE); Peukert, Michael, 75334 Straubenhardt (DE); Hafner, Klaus, 04157 Leipzig (DE)
(74) Vertreter: Frank, Gerhard, Dipl.-Phys.

(57) **Zusammenfassung**

Eine Vorrichtung zur Messung der Chemilumineszenz einer in einem Probenbehälter befindlichen Probe, weist einen Strahlungsdetektor auf, der oberhalb eines sich zumindest abschnittsweise kegelstumpfförmig aufweitenden optischen Kanals gehalten ist, in den eine Injektionseinrichtung zur Zugabe eines chemischen Reagens zur initiierung der Chemilumineszenzreaktion geführt werden kann.

Der optische Kanal (24) ist Teil einer Halterung (20 ), in der der Strahlungsdetektor (40 ) um einen Winkel (γ) so weit aus der Vertikalen geneigt und koaxial mit der Längsachse eines oberen Abschnitts (25) des optischen Kanals (24 ) gehalten ist, dass zumindest von einer wesentlichen Teilfläche der Eintrittsblende (41) des Strahlungsdetektors (40) aus der gesamte Austrittsquerschnitt (12A,13A) des Probenbehälters (12,13) sichtbar bleibt.

Damit wird erreicht, dass ohne nennenswerte Reduzierung des messbaren Anteils der aus dem Probengefäß austretenden Chemilumineszenzstrahlung eine geringe Bauhöhe erreicht wird, sowie vielseitige Anwendungen ermöglicht werden, wobei die Möglichkeit der gleichzeitigen Injektion des die Chemilumineszenzreaktion hervorrufenden Reagens in den in der Messposition befindlichen Probenbehälter beibehalten wird.

## Beschreibung

Bei der Chemilumineszenz erfolgt nach Initiierung einer chemischen Reaktion zwischen den in einem Behälter befindlichen chemischen Komponenten eine energetische Anregung, die zumindest teilweise als Strahlung emittiert wird, so dass Verlauf und Intensität dieser Strahlungsemission durch eine Messung mittels eines Strahlungsdetektors erfasst werden können und hieraus Rückschlüsse auf die Anwesenheit einer interessierenden Komponente in dem Behälter gezogen werden können.

Im Zuge der immer weiter entwickelten Standardisierung und Miniaturisierung der Laboranalytik, in deren Rahmen solche Messungen ausgeführt werden, werden die Behälter, in denen sich die miteinander reagierenden Komponenten befinden, im folgenden als Probenbehälter bezeichnet, immer kleiner; typischerweise sind diese in Form matrixartig angeordneter Vertiefungen innerhalb eines Trägers ausgeführt, einer sogenannten Mikrotiterplatte mit einer typischen Anzahl von 8 x 12 = 96 Probenbehältern, es sind jedoch auch bereits Mikrotiterplatten mit 16 x 24 = 384 oder 15 x 36 = 540 Probenbehältem im Einsatz.

Andererseits ist es nach wie vor erforderlich, zur Erfassung von sehr schnell ablaufenden Lumineszenzreaktionen eine Möglichkeit zu finden, sowohl das die Chemilumineszenzreaktion hervorrufenden Reagens der Öffnung eines Probenbehälters zuzuführen, als auch die mehr oder weniger unmittelbar folgende Strahlung aus der Öffnung des gleichen Probenbehälters zu messen. Die eingangs erwähnte Miniaturisierung der Probenbehälter und die entsprechende Reduzierung der Strahlungsemission stellt besondere Anforderungen an die Präzision der während einer Messung an wechselnden Probenbehältern auftretenden Abläufe:
Zunächst muss sichergestellt werden, dass die in den Probenbehälter zugegebene Menge des die Chemilumineszenzreaktion hervorrufenden Reagens möglichst vollständig zur Reaktion gelangt, d.h. insbesondere, nicht an Innenwänden des Probenbehälters verloren geht.

Die danach einsetzende Strahlung muss möglichst verlustfrei dem Strahlungsdetektor zugeführt werden, wobei Fremdeinflüsse insbesondere von Streustrahlungen aus der Messumgebung und/oder benachbarten Probenbehältern weitgehend eliminiert werden müssen.

Diese grundsätzlich schon immer bestehenden Anforderungen an den Ablauf einer Chemilumineszenzmessung sind durch die zum Teil schon extreme Miniaturisierung der Probenbehälter erheblich verschärft worden, da sich Ungenauigkeiten in diesem Ablauf bei reduzierter Geometrie des Probenbehälters und damit einhergehendem reduzierter Strahlungsemission überproportional auf die letztlich vom Strahlungsdetektor erfassbare Strahlungsmenge und damit die Präzision der Messung auswirken. Eine sorgfältige Dimensionierung und Abstimmung der konstruktiven Einheiten, die am Ablauf dieses Messvorgangs beteiligt sind, ist daher extrem kritisch für die Zuverlässigkeit und Verifizierbarkeit solcher Chemilumineszenzmessungen.

Die vorliegende Erfindung beschäftigt sich vorrangig mit der Übertragung der emittierten Lumineszenzstrahlung aus dem Probenbehälter in den Strahlungsdetektor.

### Stand der Technik

Es ist vorgeschlagen worden (US-PS 4,772,453), die aus einem Probengefäß nach oben austretende Lumineszenzstrahlung über eine Sammel- und Umlenkoptik, insbesondere einen Reflektor, dem Strahlungsdetektor (Photomultiplier) zuzuleiten, wobei die gesamte Anordnung in einem lichtdichten Gehäuse untergebracht ist. Eine Vorrichtung zur unmittelbaren Zugage des die Chemilumineszenzreaktion hervorrufenden Reagenz ist bei dieser Vorrichtung nicht angegeben, so dass deren Einsatzbereich auf sehr langsame Lumineszenzreaktionen eingeschränkt ist.

Eine Variante dieser Lösung ist in der DE 197 04 731 A1 beschrieben, bei der ein Photomultiplier ebenfalls waagrecht liegend angeordnet ist und die aus den notwendigerweise vertikal angeordneten Probengefäßen emittierte Lumineszenzstrahlung über einen Reflektor in die Eintrittsblende des Photomultipliers gelangt. Auch hier ist der Strahlungsweg zwischen Probenbehälter und Reflektor lichtdicht gestaltet, hier dient zu diesem Zweck ein "Tragkörper", in dem ebenfalls die Reflektorfläche angeordnet ist. Tragkörper und Reflektor können hinsichtlich ihrer geometrischen Gestaltung unterschiedlich ausgestaltet sein.

Bei dieser Lösung ist zumindest an die Zugabe des die Chemilumineszenzreaktion hervorrufenden Reagens gedacht, es soll hierfür eine Injektionsleitung zur Aufnahme einer Kanüle oder eines Schlauchs vorgesehen sein, die bis zur Eintrittsöffnung eines Probenbehälters durch diesen Tragkörper geführt sein soll.

Diese Lösung ersetzt wie die vorher genannte US-PS 4,772,453 die Probleme der Lichtleitung mittels eines Lichtleiterbündels durch Probleme der Lichtreflexion auf der Übertragungsstrecke zwischen Probenbehälter und Photomultiplier.

Eine gattungsgemäße Vorrichtung zur Messung der Chemilumineszenz ist aus der DE 41 23 818 C2 bekannt. Bei einer ersten Variante dieser Vorrichtung dient als "Strahlungsweg" zwischen Probenbehälter und Strahlungsdetektor ein Lichtleiterbündel, das die Verbindung zwischen dem Austrittsquerschnitt eines Probenbehälters und dem Eintrittsfenster des Strahlungsdetektors herstellt. Die hierbei auftretenden Verluste im Lichtleiterbündel machen diese Variante für den eingangs beschriebenen Verwendungszweck, der Messung von Chemilumineszenz mit miniaturisierten Probenbehältern, nur bedingt geeignet.

Eine zweite Variante dieser Vorrichtung sieht als Strahlungsweg zwischen Probenbehälter und Strahlungsdetektor eine Kegelblende vor, durch deren Seitenwandung eine Injektionsvorrichtung geführt ist. Der Strahlungsdetektor befindet sich unmittelbar oberhalb dieser Kegelblende koaxial zu deren Mittelachse und der Längsachse des jeweils in der Messposition befindlichen Probenbehälters.

Diese Lösung stellt die direkteste optische Verbindung zwischen Probenbehälter und Strahlungsdetektor her und kann auch als Tragkörper für letzteren ausgebildet sein.

Diese Variante der Lösung gemäß der DE 41 23 818 C2 ist jedoch nur für eine bestimmte Sorte von Probenbehältern mit vorgegebenem Austrittsquerschnitt einsetzbar, die vertikale Anordnung des Strahlungsdetektors erfordert zudem eine gewisse Bauhöhe der Vorrichtung, die nicht immer erwünscht ist.

### Darstellung der Erfindung

Es ist Aufgabe der Erfindung, die Vorrichtung gemäß der 41 23 818 C2 derart fortzubilden, dass ohne nennenswerte Reduzierung des messbaren Anteils der aus dem Probengefäß austretenden Chemilumineszenzstrahlung eine geringe Bauhöhe erreicht wird, sowie vielseitige Anwendungen ermöglicht werden, wobei die Möglichkeit der gleichzeitigen Injektion des die Chemilumineszenzreaktion hervorrufenden Reagens in den in der Messposition befindlichen Probenbehälter beibehalten werden muss.

Erfindungsgemäß wird diese Aufgabe gemäß dem kennzeichnenden Teil des Patentanspruchs 1 gelöst.

Gemäß einer besonders vorteilhaften Ausgestaltung der Erfindung ist vorgesehen, dass mindestens ein weiterer Übergangsabschnitt zum Austrittsquerschnitt eines weiteren (vorzugsweise benachbarten) Probenbehälters geführt ist, derart, dass auch hier die Austrittsöffnung des dort positionierten Probenbehälters unmittelbar von der Eintrittsblende des Strahlungsdetektors aus "gesehen" werden kann.

Zu einem oder beiden dieser optischen Kanäle können weitere Durchtrittskanäle für Injektionseinrichtungen geführt sein. Vorzugsweise liegt einer dieser Injektionskanäle in der Längsachse des zugeordneten Probenbehälters.

Weitere vorteilhafte Ausgestaltungen sind den Unteransprüchen zu entnehmen.

### Kurze Beschreibung der Zeichnungen

Ein bevorzugtes Ausführungsbeispiel der erfindungsgemäßen Vorrichtung wird anhand von Zeichnungen näher erläutert, es zeigen:
- Figur 1:: einen Vertikalschnitt durch die Vorrichtung in einer ersten Messposition in der Ebene A-A der Figur 2,
- Figur 2:: eine Aufsicht auf die Vorrichtung gemäß Figur 1,
- Figur 3:: einen Vertikalschnitt durch die Vorrichtung in einer zweiten Messposition, in der Ebene B-B der Figur 4,
- Figur 4:: eine Aufsicht auf die Vorrichtung gemäß Figur 3,
- Figur 5:: eine erste Explosionsdarstellung der Vorrichtung in der zweiten Messposition mit verschiedenen Probenbehältern, schräg von oben gesehen,
- Figur 6:: eine zweite Explosionsdarstellung gemäß Figur 5, schräg von unten gesehen,
- Figur 7:: einen Vertikalschnitt gemäß Figur 1 in der Leerposition,
- Figur 8:: einen Vertikalschnitt gemäß Figur 1 in der Sperrposition, in der Ebene C-C der Figur 9, und
- Figur 9:: eine Aufsicht auf die Vorrichtung gemäß Figur 8.

### Beschreibung des bvorzugten Ausführungsbeispiels

Über einer horizontal verschiebbaren Mikroplatte 10 ist ein Gehäuse 20 angeordnet, das einen Strahlungsdetektor 40 trägt. Hierzu weist das Gehäuse 20 eine Ringschulter auf, auf der der Rand des Strahlungsdetektors 40 aufsitzt, ferner ist eine Haltemanschette 21 zur weiteren Stabilisierung des Strahlungsdetektors vorgesehen, die in einer entsprechenden Zylinderbohrung des Gehäuses 20 sitzt.

Die Mikroplatte 10 weist in bekannter Art und Weise mehrere Vertiefungen auf, die Probenbehälter 12 bilden. Beim dargestellten Ausführungsbeispiel befindet sich der Probenbehälter 12 in einer Horizontalposition, die die Messung einer Lumineszenzoder Fluoreszenzstrahlung im Probenbehälter 12 gestattet. Der Strahlungsweg von der Austrittsöffnung 12A des Probenbehälters 12 bis zur Eintritttsblende 41 des Strahlungsdetektors 40 wird von einem Kanal 24 gebildet, der unterschiedliche Abschnitte mit unterschiedlichen Funktionen besitzt:
Sein unterer Abschnitt weist zwei Übergangsabschnitte 25A und 25B auf. Der Übergangsabschnitt 25A liegt koaxial mit der Längsachse des in horizontaler Messposition befindlichen Probenbehälters 12 und dient in seinem dem Probenbehälter 12 zugewandten Abschnitt als Führung für ein erstes Dichtelement 50A. In diesem Übergangsabschnitt 25A bzw. der aus diesem gebildeten Führung 26A für das Dichtelement 50A mündet auch das Ende einer Injektionseinrichtung 30, die zur Durchführung von Chemilumineszenzmessungen mit kurzer Verzögerung zwischen der Zugabe des initiierenden Reagens und dem Beginn der Strahlungsemission benötigt wird.

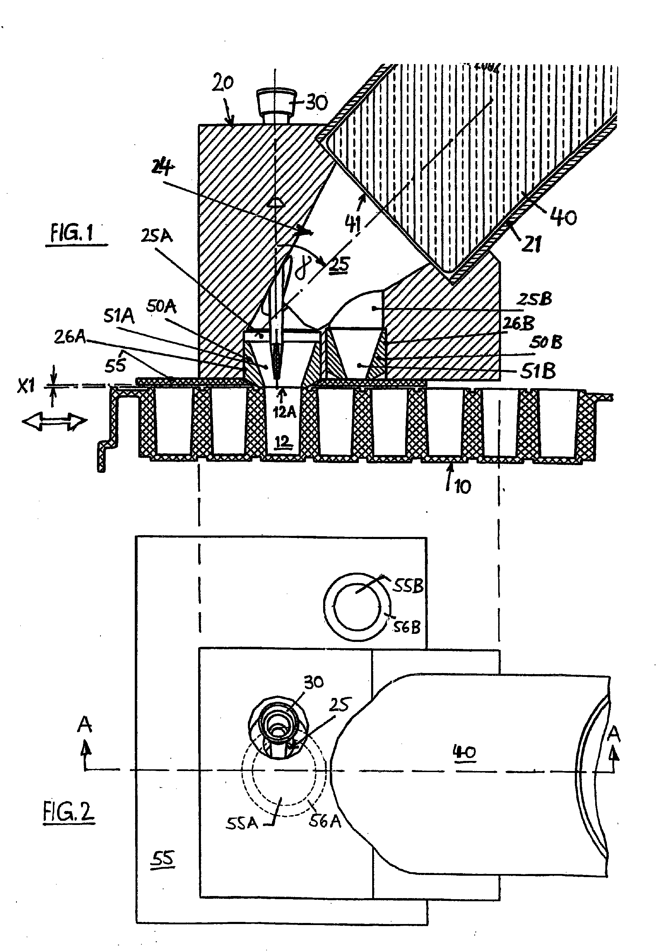

Unterhalb des Gehäuses 20 befindet sich ein Blendenelement in Form einer Blendeplatte 55 mit zwei Öffnungen 55A,55B für den unteren Abschnitt eines Dichtelementes 50A,50B. Die Führungen 26A,26B, die Dichtelemente 50A und 50B und Blendenplatte 55 sind hierbei so dimensioniert und einander zugeordnet, dass jedes Dichtelement 50A,50B zwischen zwei Endpositionen frei vertikal beweglich geführt ist. Bei der in Figur 1 dargestellten Position befindet sich das Dichtelement 50A in seiner Messposition, in der es über der Austrittsöffnung 12A des Probenbehälters 12 aufsitzt (oberer Totpunkt).

In der entgegengesetzten, oberen Endposition liegt der obere Rand des Dichtelements 50B an einer Ringschulter 27B des Übergangsabschnittes 25B an.

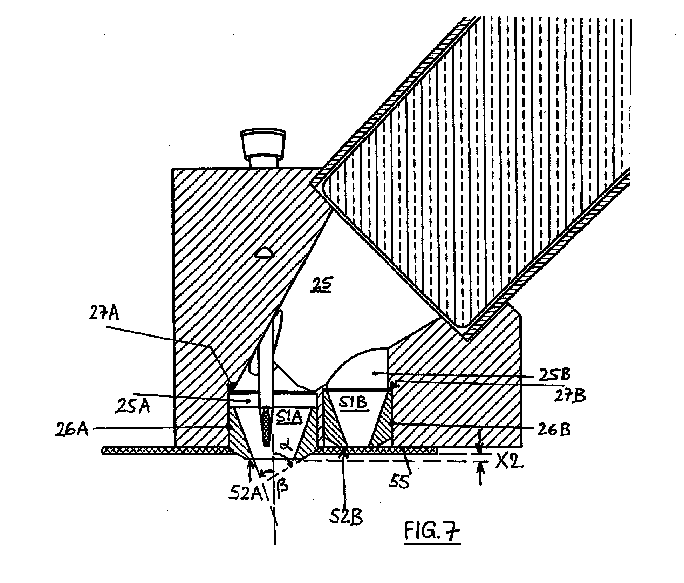

Ohne Mikroplatte (Figur 7) nimmt das Dichtelement 50A seine tiefstmögliche Position (unterer Totpunkt) an, in der es am Herausfallen aus dem Gehäuse 20 gehindert wird.

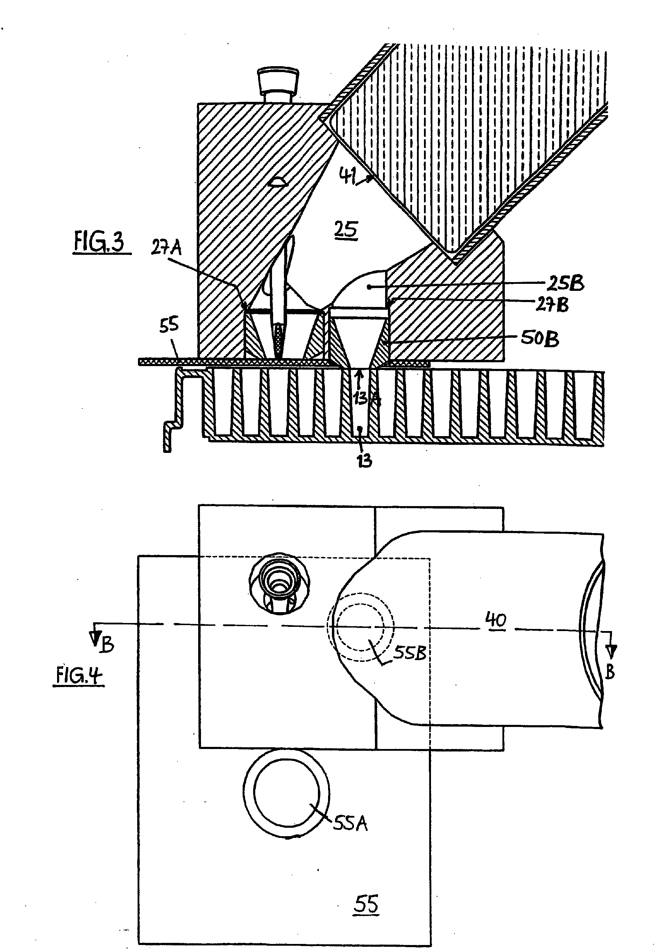

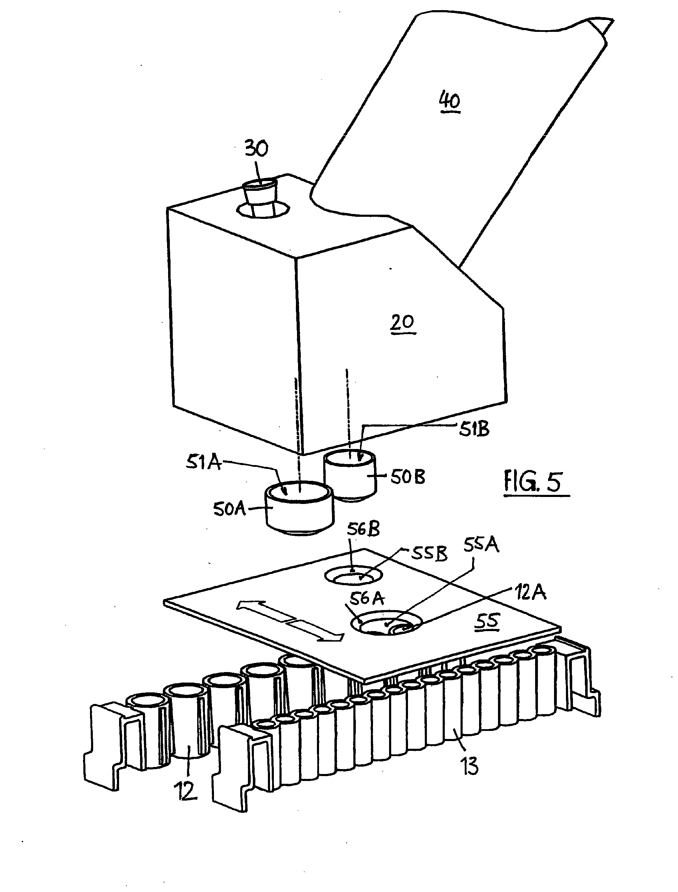

Bei Durchführung einer Messung ist die Vertikalpositionierung der Mikroplatte 10 so gewählt, dass das Dichtelement 50A oder 50B eine Position zwischen den beiden genannten Endpositionen annimmt, so dass gewährleistet ist, dass das Dichtelement 50A,50B so weit aus seiner Führung 26A,26B "herausfällt", dass sein unterer Rand 52A,52B auf dem Rand des Probenbehälters 12 (Figur 1,2) bzw. 13 (Figur 3,4) aufsitzt und diese wesentliche optische Schnittstelle zwischen Austrittsquerschnitt 12A bzw. 13A und Kanal 24 gegenüber Streulicht abdichtet.

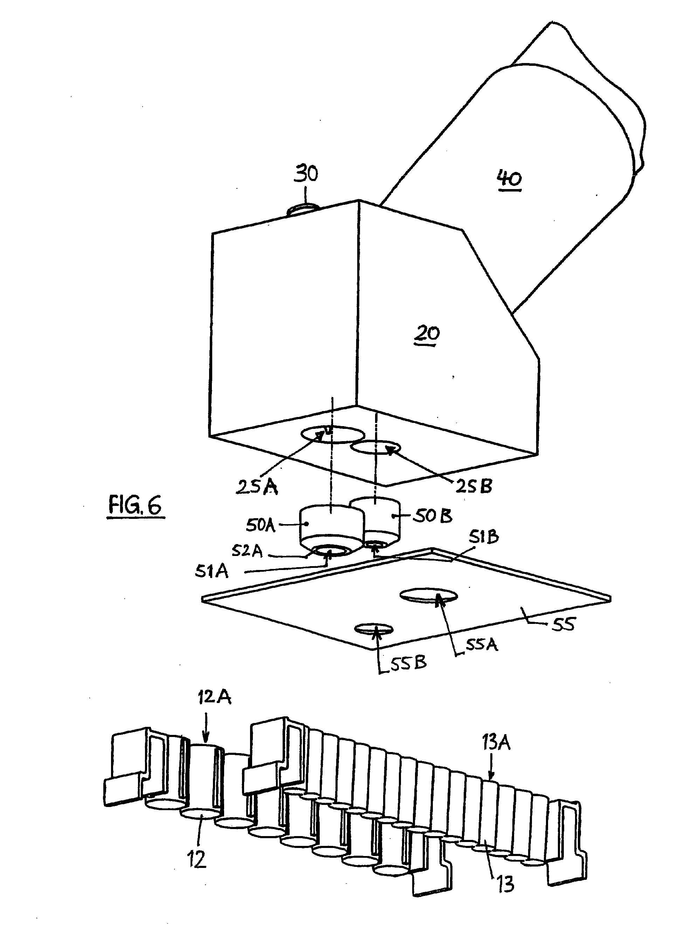

Hierbei ist jedes der beiden Dichtelemente 50A,50B mit seinem inneren, sich kegel förmig aufweitenden Durchgangskanal 51A,51B so an die verwendete Mikrotiterplatte 10 angepasst, dass der Eintrittsquerschnitt des Dichtelements möglichst weitgehend dem Austrittsquerschnitt 12A bzw. 13A des Probenbehälters 12 bzw. 13 entspricht. Dies ist schematisch auch in den Figuren 5 und 6 dargestellt:
Soll aus den Probenbehältern 12 gemessen werden, wird die Blendenplatte 55 so horizontal verschoben, dass ihre Öffnung 55A unterhalb des Dichtelements 50A zu liegen kommt; entsprechend wird bei einer beabsichtigten Messung aus den Probenbehältern 13 die Öffnung 55B unterhalb des Dichtelements 50B angeordnet.

An die Übergangsabschnitte 25A,25B schließt sich nach oben der obere gemeinsame Abschnitt 25 des Kanals 24 an, der sich kegelförmig zur Eintrittsblende 41 des Strahlungsdetektors 40 hin aufweitet, und dessen Längsachse mit der Längsachse des Strahlungsdetektors 40 fluchtet. Die Vertikalachse der Probenbehälter 12 oder 13 und des Übergangsabschnitts 25A,25B mit dem Durchgangskanal 51A,51B des Dichtelements 50A,50B einerseits und die Mittelachse des oberen Abschnitts 25 und des Strahlungsdetektors 40 andererseits bilden einen Winkel β, der beim dargestellten Ausführungsbeispiel etwa 45° beträgt. Der Winkel β ist dabei so gewählt, dass vom größten Teil der Eintrittsblende 41 des Strahlungsdetektors 40 aus der Eintrittsquerschnitt 12A,13A des jeweiligen Probenbehälters 12,13 möglichst vollständig "gesehen" wird, um einen möglichst hohen Anteil an direkter Lichtmessung zu ermöglichen.

Die Innenfläche des Kanals 24 kann zur Verbesserung der optischen Übertragungseigenschaften in an sich bekannter Weise verspiegelt ausgeführt sein.

Die Arbeitsweise der erfindungsgemäßen Vorrichtung soll nun anhand von zwei Beispielen näher erläutert werden:
Als erstes Beispiel soll eine Chemilumineszenzmessung durchgeführt werden, wobei als Mikroplatte 10 diejenige mit den größeren Probenbehältern 12 benutzt werden soll. Für die Messung muss also folglich der Übergangsabschnitt 25A des Messkanals 24 verwendet werden, in den sowohl die Injektionseinrichtung 30 hineinragt als auch das Dichtelement 50A geführt ist, da dessen Endquerschnitt so bemessen ist, dass er im wesentlichen mit dem Austrittsquerschnitt 12A der Probenbehälter 12 übereinstimmt.

Die Blendenplatte 55 wird zunächst in die in Figur 1 und 2 dargestellte Position verfahren, in der das Dichtelement 50A mit seinem unteren konischen Rand auf dem konischen Rand 56A der Blendenplatte aufsitzt und somit der in Figur 7 dargestellte, untere Totpunkt des Dichtelementes 50A erreicht ist, also diejenige Position, in der die Vorrichtung zur Messung bereit ist, aber noch keine Mikroplatte 10 sich unterhalb der Blendenplatte 55 befindet. Der untere Totpunkt ist demnach durch einen Abstand X2 des unteren Randes 52A des Dichtelementes 50A von der Unterseite der Blendenplatte 55 charakterisiert.

Zur Durchführung der Messung wird mit an sich bekannten Vorrichtungen, also insbesondere schlittenähnlichen Aufnahmeplatten, die Mikroplatte 10 unter der Blendenplatte 55 vorbeigeführt, bis die Austrittsquerschnitte 12A der Probenbehälter 12 nacheinander mit dem unteren Querschnitt des Dichtelementes 50A fluchten. Hierbei ist zu beachten, dass der Abstand X1 der Oberkante der Mikroplatte 10 zur Unterseite der Blendenplatte 55 geringer ist, als der Abstand X2, d.h., das Dichtelement 50A befindet sich in einer gegenüber des unteren Totpunkts angehobenen Position, in der sein unterer Konusabschnitt nicht mehr auf dem entsprechend ausgebildeten konusförmigen inneren Rand 56A der Blendenplatte 55 aufsitzt, sondern ausschließlich sein innerer, unterer Rand 52A auf dem entsprechenden oberen Rand der Mikroplatte 10 in der unmittelbaren Umgebung des Austrittsquerschnitts 12A eines Probenbehälters 12. Durch diese Entkoppelung zwischen Blendenplatte 55 und Dichtelement 50A in der Messposition ist folglich gewährleistet, dass ein weitgehend vollflächiges Aufsitzen des Dichtelementes 50A auf dem oberen Rand des Probenbehälters 12 erfolgt, was Voraussetzung für eine optimale Abdichtung gegen Umgebungsstreulicht ist.

In dieser Position kann nun die Chemilumineszenzmessung durchgeführt werden, d.h., es wird von der Injektionseinrichtung 30 das entsprechende Reagens in den Probenbehälter 12 eingegeben, wonach die entsprechende Chemilumineszenzreaktion abläuft und die Lumineszenzstrahlung über den optischen Kanal 24 mit minimaler Schwächung in den Eintrittsquerschnitt 41 des Strahlungsdetektors 40 gelangt, in der Regel ein Fotomultiplier.

Nach Durchführung der Messung an der gewünschten Zahl der Probenbehälter 12 in der Mikroplatte 10 wird diese weggefahren und das Dichtelement 50A fällt wieder nach unten, bis der in Figur 7 dargestellte untere Totpunkt (Abstand X2) erreicht ist.

Beim zweiten Beispiel soll eine Strahlungsmessung durchgeführt werden, die keine Injektion eines Reagens erfordert und es sollen hierfür Mikroplatten 10 mit den kleineren Probenbehältern 13 verwendet werden.

Die Blendenplatte 55 wird demnach so verfahren, bis sie die in Figur 3 und 4 dargestellte Position erreicht hat, bei der das Dichtelement 50B auf dem oberen Rand eines der Probenbehälter 13 aufsitzt. Bei der dann anschließenden Reaktion gelangt das Reaktionslicht über den Übergangsabschnitt 25B in den optischen Kanal 24 und von dort zur Eintrittsblende 41 des Detektors 40.

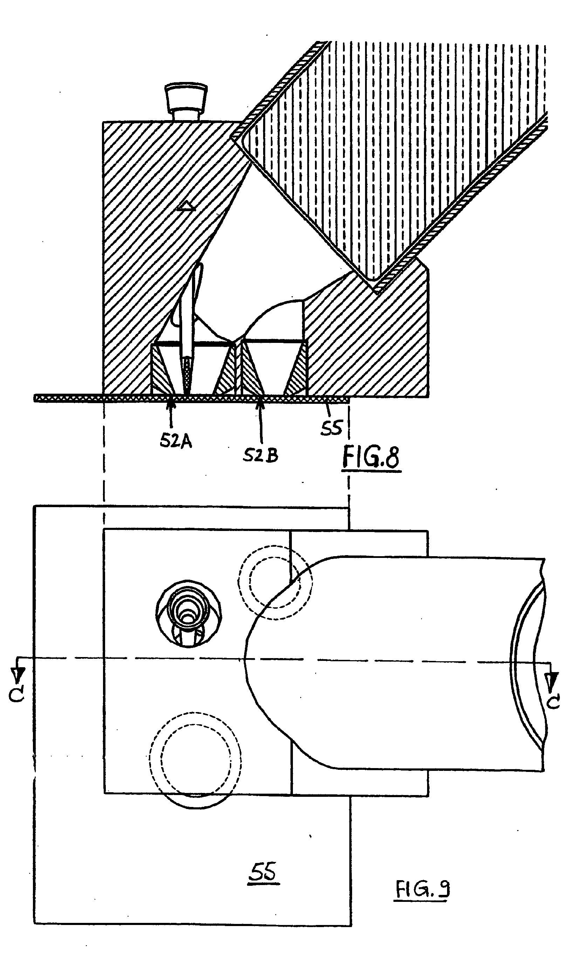

Wenn die Messungen abgeschlossen sind, kann die Blendenplatte 55 in die in Figur 8 und 9 dargestellte Position verfahren werden, bei der beide Dichtelemente 50A,50B mit ihrem unteren Rand 52A,52B auf der Oberseite der Blendenplatte 55 aufsitzen und der optische Strahlungsweg gesperrt ist. In dieser Position befinden sich die beiden Dichtelemente 50A,50B in ihrem oberen Totpunkt.

Die Blendenplatte 55 steuert durch ihre horizontale Positionierung die Vertikalverschiebung der Dichtelemente 50A,50B in deren Führungen 26A,26B, die als zylindrischer Teilabschnitt der unteren Übergangsabschnitte 25A,25B des optischen Kanals 24 ausgebildet sind.

Die Blendenplatte 55 dient folglich bei der erfindungsgemäßen Lösung funktionell als Schaltelement, in dem sie entweder eine der beiden Dichtelemente 50A/50B aktiviert (Figur 1/2 oder Figur 3/4), oder aber beide Dichtelemente in eine "Ruheposition" schaltet (Figur 8/9).

Die erfindungsgemäße Vorrichtung erlaubt somit mit einem äußerst kompakten Aufbau die Durchführung verschiedener Messungen, insbesondere Chemilumineszenzmessungen, unter Gewährleistung einer optimierten Abdichtung des optischen Kanals gegenüber Streulichteinflüssen und Gewährleistung einer hohen Lichtausbeute auch bei der Verwendung von Probenbehältem mit sehr geringem Austrittsquerschnitt.

Es sind bei der erfindungsgemässen Gestaltung des Strahlungsweges grundsätzlich jedoch auch andere Lösungen zur Abdichtung einsetzbar, bspw. eine in der DE 41 23 817 beschriebene Blendenplatte.

## Patentansprüche

1. Vorrichtung zur Messung der Chemilumineszenz einer in einem Probenbehälter befindlichen Probe, mit einem Strahlungsdetektor, der oberhalb eines sich zumindest abschnittsweise kegelstumpfförmig aufweitenden optischen Kanals gehalten ist, in den eine Injektionseinrichtung zur Zugabe eines chemischen Reagens zur Initiierung der Chemilumineszenzreaktion geführt werden kann,
**dadurch gekennzeichnet, dass** der optische Kanal (24) Teil einer Halterung (20 ) ist, in der der Strahlungsdetektor (40 ) um einen Winkel (γ) so weit aus der Vertikalen geneigt und koaxial mit der Längsachse eines oberen Abschnitts (25) des optischen Kanals (24 ) gehalten ist, dass zumindest von einer wesentlichen Teilfläche der Eintrittsblende (41 ) des Strahlungsdetektors (40 ) aus der gesamte Austrittsquerschnitt (12A,13A) des Probenbehälters (12,13 ) sichtbar bleibt.

2. Vorrichtung nach Anspruch 1, **dadurch gekennzeichnet, dass** der optische Kanal (24) einen oberen, kegelstumpfförmigen, ersten Abschnitt (25) und mindestens einen Übergangsabschnitt (25A,25B) aufweist, der von jeweils einem der Austrittsquerschnitte (12A,13A) jeweils eines Probenbehälters (12,13) in den ersten Abschnitt (25) führt.

3. Vorrichtung nach Anspruch 2, **dadurch gekennzeichnet, dass** mindestens zwei Übergangsabschnitte (25A ,25B) für jeweils einen Probenbehälter (12,13) vorgesehen sind, deren untere Öffnungen verschließbar ausgebildet sind.

4. Vorrichtung nach Anspruch 3, **dadurch gekennzeichnet, dass** ein verschieb- oder verdrehbares Blendenelement vorgesehen ist, das jeweils eine der Öffnungen für einen der Probenbehälter (12,13) frei gibt und die andere(n) verschließt.

5. Vorrichtung nach Anspruch 4, **dadurch gekennzeichnet, dass** das Blendenelement mindestens ein Dichtelement (50A,50B) zum Probenbehälter beinhaltet.

6. Vorrichtung nach Anspruch 5, **dadurch gekennzeichnet, dass** der Durchtrittsquerschnitt der Dichtelemente (50A,50B) auf die Austrittsquerschnitte (12A,12B) der Probenbehälter (12,13) für die Chemilumineszenzstrahlung angepasst sind.
